(19) **Europäisches Patentamt**
**European Patent Office**
**Office européen des brevets**

(11) **EP 2 120 134 A1**

(12) **EUROPEAN PATENT APPLICATION**
published in accordance with Art. 153(4) EPC

(43) Date of publication:
**18.11.2009 Bulletin 2009/47**

(21) Application number: **08712116.6**

(22) Date of filing: **28.02.2008**

(51) Int Cl.:
***G06F 3/041*** (2006.01)

(86) International application number:
**PCT/JP2008/053545**

(87) International publication number:
**WO 2008/108275 (12.09.2008 Gazette 2008/37)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.03.2007 JP 2007057911**

(71) Applicant: **NEC Corporation**
**Minato-ku**
**Tokyo 108-8001 (JP)**

(72) Inventor: **HIROKAWA, Yohei**
**Tokyo 108-8001 (JP)**

(74) Representative: **Merkau, Bernhard**
**Glawe. Delfs. Moll**
**Postbox 26 01 62**
**80058 Munich (DE)**

(54) **DISPLAY TERMINAL WITH TOUCH PANEL FUNCTION AND CALIBRATION METHOD**

(57)     In a state where an inappropriate calibration has been performed, adequacy of the calibration is checked with a touch to a display screen so as to resolve the inappropriate calibration state. The display terminal device includes a touch panel provided on the display screen, a touch panel driver which generates coordinate data of a touched point on the touch panel, and a control section which performs calibration of the display screen based on the coordinate data output by the touch panel driver. The control section reduces an error between the measured coordinate data of the touched point and logic coordinate data by confirming that a difference between multiple pieces of X coordinate data and a difference between multiple pieces of Y coordinate data, generated by repeated touches to the points other than the center of the touch panel, are within an allowable range.

## FIG. 1

**Description**

TECHNICAL FIELD

The present invention relates to a display terminal device with a touch panel. In particular, the present invention relates to a display terminal device with a touch panel function and its calibration method, capable of, when calibration of the display screen may be in an inappropriate state due to erroneous operation, aging, or the like, resolving the inappropriate calibration state by prompting the start of calibration again.

BACKGROUND ART

Display terminal devices with a touch panel on the display screen of a display, formed of an LCD (Liquid Crystal Display) for example, are well known. Also, some methods for performing recalibration when calibration of a display screen becomes inappropriate due to erroneous operation, aging, or the like, have been known. However, in display terminal devices with a touch panel, various problems have been caused for the case where calibration of the display screen becomes inappropriate during use.

A first problem is that there has been a possibility that when calibration is performed on a display terminal device with a touch panel, the device may be in an incorrect calibration state due to an erroneous operation by a user. A second problem is that when calibration has been performed, as information of the time that calibration has been performed is not stored together, even if the device becomes an inappropriate calibration state due to aging, calibration will never be performed unless the user starts calibration processing.

A third problem is that regarding a small-sized terminal such as a mobile telephone with a touch panel, although a place where the terminal is used is widely changed from an indoor to an outdoor so that the environmental temperature of the terminal is drastically changed, calibration of the display surface is not performed again on the terminal unless the user start calibration by himself/herself.

Patent Document 1 discloses a resistive touch panel device, in which as resistance values of two silver electrodes can be acquired by measuring an inter-terminal resistance value of a pressure-sensitive touch panel on the basis of a high-precision fixed resistance and acquiring a resistance value of an ITO film based on the length of an ITO film and a distance between calibration positions when performing calibration at the time of manufacturing in a factory or the like, displacement is corrected by measuring an inter-terminal resistance value of a pressure-sensitive touch panel, calculating a rate of change which coincides with the sum of values calculated by multiplying a rate of change to each of a silver electrode resistance value and an ITO film resistance value, acquired at the time of calibration, and updating the calibration value in accordance with the calculated rate of change.

As described above, Patent Document 1 describes that displacement due to aging or temperature change can be prevented without performing calibration operation according to the art of Patent Document 1.

However, Patent Document 1 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Further, Patent Document 2 discloses an image forming device, in which when the device is in a touch panel adjustment mode, as reference marks and sequence marks are displayed at the four corners of a touch panel, first, it is determined whether a part near a reference mark 1 is pressed. Then, the reference mark 1 is deleted and it is determined whether a part near a reference mark 2 is pressed. If it is determined that the reference mark 2 is pressed, display of the reference mark 2 is deleted. Finally, the four voltage values are applied with A/D conversion and written in a nonvolatile memory. As such, by applying a sequence with which a non-professional person can easily adjust the touch panel, a user can correct the position where the touch panel is physically pressed and the recognized position by himself/herself.

As described above, Patent Document 2 describes that it is possible to provide an image forming device with a touch panel that a user can easily correct even if a voltage of a reference point is changed due to aging or environmental effects.

However, Patent Document 2 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Patent Document 3 discloses an input position adjusting device and an input position adjusting program. In Patent Document 3, in a touch panel unit having a touch panel and an AD converter, a PDA used as an input function adjusting device displays one input point for calibration on an LCD according to a display position stored in a storage device each time a user logs in. The user is prompted to input the position corresponding to the input point from the touch panel, and the position is stored in the storage device. When four calibration executable input positions are stored, the reference coordinates are computed using the four input positions and the display positions corresponding thereto, and stored and set in the storage device. When the position is input to the touch panel after setting, the input position is calibrated using the reference coordinates.

As described above, Patent Document 3 describes that a work load for performing calibration of the touch panel is reduced and calibration can be performed at appropriate time, according to the art of Patent Document 3.

However, Patent Document 3 nowhere describes that in a display terminal device with a touch panel, if calibration may be in an inappropriate state due to erroneous operation or aging, when variations of X coordinates and Y coordinates obtained thorough twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Further, Patent Document 4 discloses a display device with a touch panel including: a coordinate input device controller which calculates coordinates of a touch point detected on a display screen; a correction factor calculation unit which indicates the touch point touched at least one point on the display screen in a touch coordinate space and display coordinates, and based on a difference between the touch coordinates and the display coordinates, calculates correction factors for correcting the touch coordinates so as to conform the touch coordinate to the display coordinates; and a coordinate correction unit which corrects the coordinates of the touch point of the detected touch with use of the calculated correction factors. Patent Document 4 also discloses a method of controlling the display device with a touch panel, and a program for causing a computer to perform the method.

As described above, Patent Document 4 describes to provide a display device with a touch panel which can be used by connecting a coordinate input device to a standard computer without installing a unique driver, according to the art of Patent Document 4.

However, Patent Document 4 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Further, Patent Document 5 discloses a touch-panel input device characterized by monitoring, for a certain period, input coordinate data of a fixed key which is determined as being input normally when an enter key is pressed, calculating a shift amount based on distribution information of the data, and giving warning if it is determined that calibration is required based on the shift amount, or automatically compensating based on the calculated shift amount. The touch-panel input device is also characterized by prompting re-execution of calibration if calibration result is significantly different from previous calibration data or coordinate data of default data, or using the previous calibration data or default data as calibration data.

As described above, Patent Document 5 describes that accurate compensation can be performed by not using input coordinates of a key, that an operation is not intended, for data analysis of calibration, according to the art of Patent Document 5.

However, Patent Document 5 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Further, Patent Document 6 discloses a touch panel control device including a horizontal resistance film and a vertical resistance film, in which a voltage at each end part of both the horizontal resistance film and the vertical resistance film in a non-touched state is stored in a RAM, and then a voltage detected in a touched state is corrected by the voltage stored in the RAM, and voltage fluctuation caused by the temperature of the voltage detected in the touched state is eliminated to thereby a touched position is detected according to the corrected voltage. As such, the touched position can be accurately detected without being affected by the temperature.

As described above, Patent Document 6 describes that a pressed (touched) position can be accurately detected without being affected by the temperature, according to the art of Patent Document 7.

However, Patent Document 6 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

Further, Patent Document 7 discloses a display terminal device and a coordinate calibration method for a display terminal device, in which a microcomputer displays lower left and upper right positions of the screen of a CRT as touch positions, and a touch panel controller performs calibration for setting physical coordinate data that an operator has outputted by touching and indicating a touch panel according to respective touch positions, as new reference position data. Further, the microcomputer also displays the center of the screen of the CRT as a touch position, determines whether or not logical coordinate data obtained by converting, by a touch panel controller, the coordinates of physical coordinate data that the user has outputted by touching and indicating the touch panel according to the touch position based on the new reference position data are within an allowable range, and allows recalibration when the data is determined to be outside the allowable range.

As described above, Patent Document 7 describes to provide a display terminal device and a coordinate calibration method for a display terminal device, capable of performing recalibration even if inappropriate calibration has been performed, according to the art of Patent Document 7.

However, Patent Document 7 nowhere describes that in a display terminal device with a touch panel, if calibration may be in an inappropriate state due to erroneous operation or aging, when variations of X coordinates and Y coordinates obtained through twice touches performed on two points other than the center of the display screen of a display are within a normal range, adequacy of calibration is confirmed by confirming that variations of the X coordinate and the Y coordinate of the center point of the display surface are within an allowable range, and if there is any inadequacy, the start of calibration is prompted.

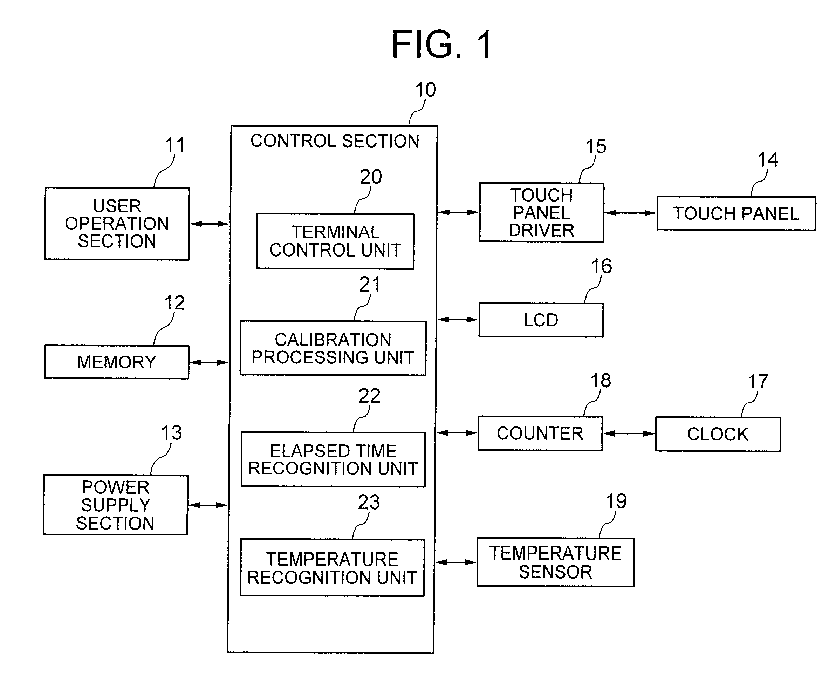

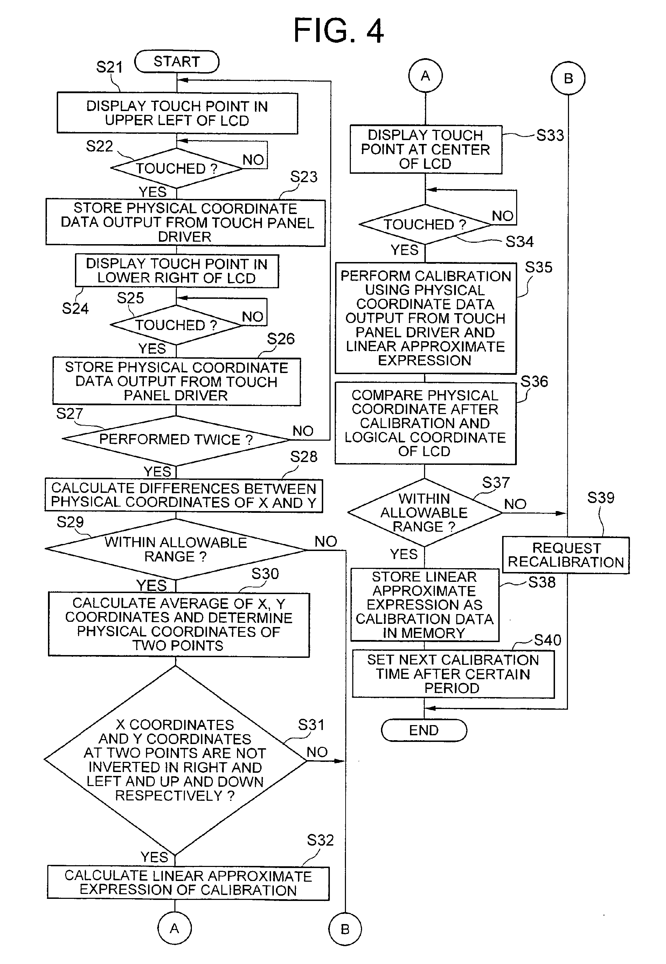

Patent Document 1: Japanese Patent Laid-Open Publication No. 2001-265512 ([0060]-[0063])
Patent Document 2: Japanese Patent Laid-Open Publication No. 2003-263275 ([0018], Fig. 1, [0019], Fig. 1, Fig. 4, Fig. 5, [0029], Fig. 4, [0030], [0036])
Patent Document 3: Japanese Patent Laid-Open Publication No. 2004-054413 ([0016], [0017], [0020], [0035], Fig. 8, [0032]-[0035], Fig. 7, Fig. 8, [0044], [0045])
Patent Document 4: Japanese Patent Laid-Open Publication No. 2005-056088 ([0042], [0060], [0062], Fig. 6, Fig. 7)
Patent Document 5: Japanese Patent Laid-Open Publication No. 2006-243939 ([0020]-[0022])
Patent Document 6: Japanese Patent Laid-Open Publication No. 09-160719 ([0022], [0023], [0026])
Patent Document 7: Japanese Patent Laid-Open Publication No. 10-116155 ([0002], [0006], [0007], [0008], Fig. 8, [0031]-[0036])

## DISCLOSURE OF THE INVENTION

### PROBLEMS TO BE SOLVED BY THE INVENTION

In a general-purpose display terminal device with a touch panel function, a state of inappropriate calibration may be caused by erroneous operation performed by a user when calibration is performed on the display terminal device, by aging, or the like.

An object of the present invention is to provide a display terminal device with a touch panel function and a calibration method thereof, capable of resolving inappropriate calibration state by confirming adequacy of calibration with a touch to the display screen when the device is in an inappropriate calibration state.

### MEANS FOR SOLVING THE PROBLEMS

In order to achieve the object, a display terminal device with a touch panel function includes a touch panel provided to a display screen, a touch panel driver which generates coordinate data of a point where the touch panel is touched, and a control section which performs calibration of the display screen based on the coordinate data output by the touch panel driver. The control section confirms that a difference between multiple pieces of X coordinate data and a difference between multiple pieces of Y coordinate data, generated by repeated touches to points other than the center of the touch panel, are within an allowable range, to thereby reduce an error between the measured coordinate data of the touched point and logical coordinate data.

### EFFECTS OF THE INVENTION

According to the present invention, as the control section confirms that a difference between multiple pieces of X coordinate data and a difference between multiple pieces of Y coordinate data, generated by repeated touches to points other than the center of the touch panel, are within an allowable range to thereby reduce an error between measured coordinate data of the touched point and logical coordinate data, even if the device is in an inappropriate calibration state by erroneous touching operation by a user, aging, or the like, the inappropriate calibration state can be resolved reliably.

BEST MODE FOR CARRYING OUT THE INVENTION

Hereinafter, exemplary embodiments of the invention will be described in detail based on the drawings.

As shown in Fig. 1, a display terminal device with a touch panel function, according to an exemplary embodiment of the invention, includes a touch panel 14 provided on a display screen, a touch panel driver 15 which generates coordinate data of a point touched on the touch panel 14, and a control section 10 which performs calibration of the display screen based on the coordinate data output by the touch panel driver 15, as the basic structure. The control section 10 is characterized as to reduce an error between the measured data of the touched point and the logical coordinate data by confirming that a difference between multiple pieces of X coordinate data and a difference between multiple pieces of Y coordinate data, generated by repeated touches performed on points other than the center of the touch panel 14, are within an allowable range.

According to the exemplary embodiment of the invention, as the control section reduces the error between the measured data of the touched point and the logical coordinate data by confirming that the difference between the multiple pieces of X coordinate data and the difference between the multiple pieces of Y coordinate data generated by repeated touches performed on the points other than the center of the touch panel 14 are within the allowable range, even if a state of inappropriate calibration is caused by errors in the user's touching operation, aging, or the like, it is possible to reliably resolve the inappropriate calibration state.

Next, the exemplary embodiment of the invention will be described in more detail based on specific examples.

(First Exemplary Embodiment)

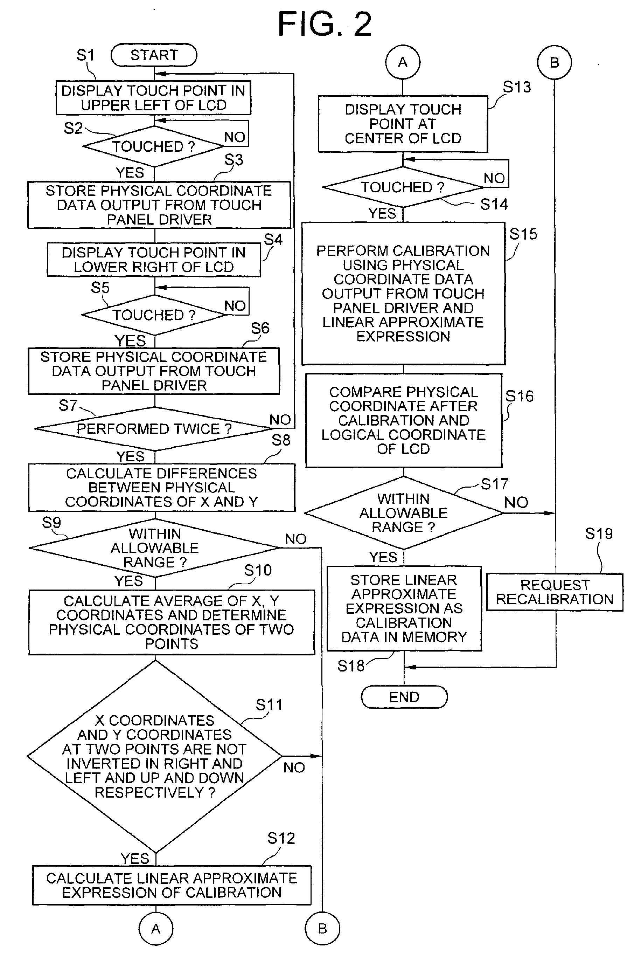

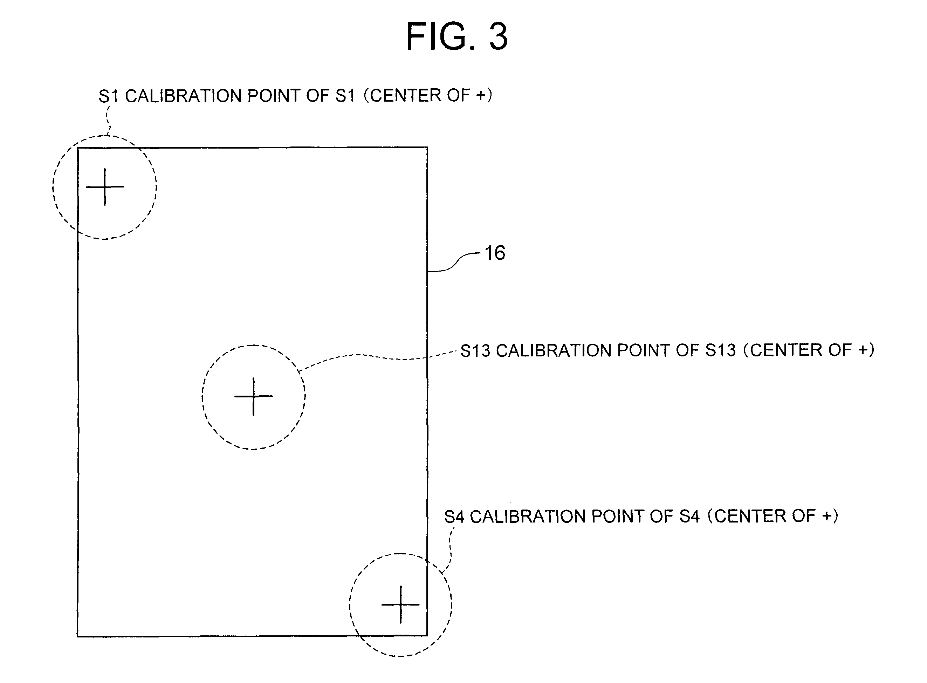

Fig. 1 is a block diagram showing the configuration of a display terminal device with a touch panel function according to a first exemplary embodiment of the invention, Fig. 2 is a flowchart showing calibration by the display terminal device with a touch panel function according to the first exemplary embodiment of the invention, and Fig. 3 is a diagram exemplary showing a display of an LCD at the time of calibration in the first exemplary embodiment.

As shown in Fig. 1, the display terminal device with a touch panel function according to the first exemplary embodiment of the invention includes the control section 10, a user operation section 11, a memory 12, a power supply section 13, the touch panel 14, the touch panel driver 15, an LCD 16, a clock 17, a counter 18, and a temperature sensor 19.

The control section 10 controls calibration of the touch panel and overall operation of the device, and includes a terminal control section 20, a calibration processing unit 21, an elapsed time recognition unit 22, and a temperature recognition unit 23. The user operation section 11 interfaces, to the control section 10, operations performed by a user in the operating part (not shown). The memory 12 is composed of a ROM (not shown) which is a storage unit for storing control programs of the control section 10, and a RAM (not shown) which is used as a work area of the control section 10 and temporarily stores user settings. The power supply section 13 is formed of a battery for example, and supplies power source to the respective sections of the device. The touch panel 14 is formed of a film-shaped resistance provided on the screen of the LCD 16, and has a function of changing an output voltage based on fluctuations of the resistance value caused when the user touches.

The touch panel driver 15 A/D converts a voltage output from the touch panel 14 in accordance with an operation by a user, and transmits coordinate information of the touched point, consisting of digital information, to the control section 10 as coordinate data which is actually measured (measured coordinate data). The LCD 16 performs required visible display based on an instruction by the control section 10. The clock 17 generates clock signals serving as references for measuring time. The counter 18 counts clock signals from the clock 17 to thereby measure elapsed time. The temperature sensor 19 measures the temperature of the display terminal device and transmits the temperature to the control section 10, whereby the control section 10 recognizes the temperature of the terminal device.

Further, in the control section 10, the terminal control section 20 controls the display terminal device. The calibration processing unit 21 performs calibration processing for matching the measured coordinate data output from the touch panel driver 15 and the logical coordinate data of each point on the screen of the LCD 16. The elapsed time recognition unit 22 recognizes the elapsed time for time management to be performed by the display terminal device using information from the counter 18. The temperature recognition unit 23 recognizes the temperature of the display terminal device with the information from the temperature sensor 19.

Next, operation of the terminal device with a touch panel function of this example will be described using the flowchart of Fig. 2.

When the control section 10 performs calibration, a point prompting the user to touch is displayed on the upper left part of the screen of the LCD as shown in Fig. 3 (step S1) under the control of the terminal control section 20 of the control section 10.

When the user touches the point (step S2), the touch panel 14 outputs a touch to the touch panel as fluctuation of a voltage, to the touch panel driver 15. When receiving a signal output by the touch panel 14, the touch panel driver 15 outputs measured coordinate data [XL1, YL1] of the touched point on the touch panel, to the control section 10. The control section 10 temporarily stores the measured coordinate data output by the touch panel driver 15 in the memory 12 (step S3).

When the terminal control section 20 of the control section 10 detects that the measured coordinate data from the touch panel driver 15 is received, the terminal control section 20 outputs, to the LCD 16, a command to display a point prompting a touch in the lower right on the screen of the LCD 16 shown in Fig. 3 (step S4).

When the user touches the point in accordance with the display of the LCD 16 (step S5), the touch panel 14 outputs a touch to the touch panel as fluctuation of a voltage to the touch panel driver 15. When receiving a signal output by the touch panel 14, the touch panel driver 15 outputs, to the control section 10, measured coordinate data [XR2, YR2] of the touched point on the touch panel. The control section 10 temporarily stores the measured coordinate data output by the touch panel driver 15 in the memory 12 (step S6).

When the operation from step S1 to step S6 has been performed twice (step S7), the control section 10, in particular, the calibration processing unit 21 calculates differences between the respective coordinate data measured at two points which have been acquired by the twice touches (step S8). In other words, with use of the measured coordinate data [XL1, YL1] acquired by the first touch to the upper left on the LCD 16 and the measured coordinate data [XR2, YR2] acquired by the second touch, the calibration processing unit 21 calculates a difference between the X coordinates [XL1-XR2] and a difference between the Y coordinates [YL1-YR2].

Next, the calculation processing unit 21 of the control section 10 checks whether or not these differences are within an allowable range (step S9), and if the differences are out of the allowable range, the calculation processing unit 21 requests for recalibration (step S19) and terminates the processing, and if the differences are within the allowable range, the calculation processing unit 21 calculates average values of the measured coordinate data at two points for the respective coordinate values to thereby determine the measured coordinates [XL, YL] [XR, YR] of the two points (step S10).

Further, in the case where a point in the upper left on the LCD 16 is the origin and a right direction indicates large in the X direction and a downward direction indicates large in the Y direction, relationships of XL<XR and XL<XR are established. As such, from the magnitude relationships between XL and XR and between YL and YR, the calibration processing unit 21 of the control section 10 checks whether or not the X coordinates at the two points are inverted in the right and left direction and whether or not the Y coordinates at the two points are inverted in the up and down direction through the twice touches, and confirms that the locations of the respective points are not inverted (step S11). If the locations are inverted, the calibration processing unit 21 requests for recalibration (step S19) and terminates the processing.

On the other hand, if the locations of the points are not inverted, the calibration processing unit 21 of the control section 10 calculates, using a well-known calculation method, the following linear approximate expression from the physical coordinates [Xphy, Yphy] to the logical coordinate [Xlog, Ylog] (step S12), where the logical coordinate of the upper left point on the LCD 16 is [xl, yl] and the logical coordinate of the lower right point is [xr, yr]:

$$\mathtt{Xlog=\{(xr-xl)/(XR-XL)\}*Xphy+(xl*XR-XL*xr)/(XR-XL)}$$

$$\mathtt{Ylog=\{(yr-yl)/(YR-YL)\}*Xphy+(yl*YR-YL*yr)/YR-YL)} \quad \cdots (1)$$

When the calibration processing unit 21 of the control section 10 has completed the above-described processing, the terminal control section 20 displays a point for prompting a user to touch at the center of the LCD 16 (step S13).

When the user touches the point (step S14), the touch panel driver 15 outputs the measured coordinate data of the point touched by the user, to the calibration processing unit 21 of the control section 10. The calibration processing unit 21 of the control section 10 performs approximation using the calculated linear approximate expression on the measured coordinate data and matches the measured coordinate data to the logical coordinate data on the LCD 16 to thereby carry out calibration (step S15).

Next, the calibration processing unit 21 of the control section 10 compares the measured coordinate data [XC, YC] after the calibration with the logical coordinate data [xc, yc] on the LCD 16, and calculates differences |XC-xc|, |YC-yc| (step S16), and checks whether or not the respective differences are within the allowable range (step S17). If the differences are out of the allowable range, the calibration processing unit 21 requests for recalibration (step S19) and terminates the processing, and if the differences are within the allowable range, the calibration processing unit 21 stores the calculated linear approximate expression as calibration data in the memory 12 (step S18) and terminates the processing.

In the above-described processing, when recalibration is requested (step S19), it is possible to notify the user that he/she has to start calibration, by displaying a touch point in the upper left on the display screen of the LCD 16 (step S1). Further, any text display indicating this may be displayed near the touch point. In order to maintain the accuracy of calibration, the allowable range for the respective coordinate differences is required to be within several % of the display region dots of the LCD 16. The allowable range for the coordinates of the center point of the LCD 16 after the calibration has to be defined to be within several %, while considering the linearity of the touch panel 14.

Fig. 3 shows touch points displayed on the screen of the LCD 16 when the calibration of this example is carried out, including a calibration point (center of cross) in the case of step S1 in the upper left of the screen, a calibration point (center of cross) in the case of step S4 in the lower right of the screen, and a calibration point (center of cross) in the case of step S13 at the center of the screen.

According to the first exemplary embodiment of the invention, when it is confirmed that the respective differences of the X coordinates and the Y coordinates, generated by repeated touches to the points other than the center of the display screen, are within the allowable range and that the X coordinates of the respective points are not inverted in the right and left direction and the Y coordinates of the respective points are not inverted in the up and down direction, as the calibration processing ends when it is confirmed that the changes in the X coordinate and the Y coordinate of the center point of the display screen are within the allowable range, it is possible to reduce a possibility that inappropriate calibration remains even if a user erroneously performs a touch operation.

(Second Exemplary Embodiment)

Fig. 4 is a flowchart showing another calibration by a display terminal device with a touch panel function according to a second exemplary embodiment of the invention. Although the configuration of the display terminal device with a touch panel function for carrying out calibration of this example is the same as that of the first exemplary embodiment shown in FIG. 1, processing for storing calibration data when calibration ends and an aspect of setting execution of the next calibration under certain conditions are different from the first exemplary embodiment.

In Fig. 4, as step S21 to step S37 are the same as those of step S1 to S17 of the first exemplary embodiment, and as processing of requesting recalibration at step S39, when the differences between the measured coordinate data after calibration has been performed and the logical coordinate data of the LCD are out of the allowable range, are the same as that of step S19 of the first exemplary embodiment, detailed description of these aspects is not repeated below.

At step S37, when the respective differences are within the allowable range, the calibration processing unit 21 of the control section 10 stores the linear approximate expression and time information of the calibration (date and time; reference time information) as calibration data in the memory 12 (step S38).

The counter 18 counts the elapsed time based on the signal output from the clock 17, and outputs the counted data to the elapsed time recognition unit 22. The calibration processing unit 21 of the control section 10 receives time data output from the elapsed time recognition unit 22, compares the reference time information and the time data, sets timing to start the next calibration when a predetermined period elapses (step S40), and terminates the processing.

When the calibration processing unit 21 of the control section 10 starts the next calibration after the predetermined period, as a touch point is displayed in the upper left on the screen of the LCD 16 under the control of the terminal control section 20 (step S21), the user will be able to start the next calibration. In that case, as there is a possibility that processing other than calibration may be performed in the display terminal device, it is desirable to show a text display or the like prompting the user to touch the touch point, near the touch point.

According to the second exemplary embodiment of the invention, when the calibration is terminated and the calibration data is stored in the memory 12, time information regarding the time when the calibration has been performed is also stored together with the calibration data, and as a fact that the next calibration processing has to be started using elapse of a predetermined time as a trigger can be displayed on the screen of the display terminal device, it is possible to reduce a possibility that inappropriate calibration state remains due to aging.

(Third Exemplary Embodiment)

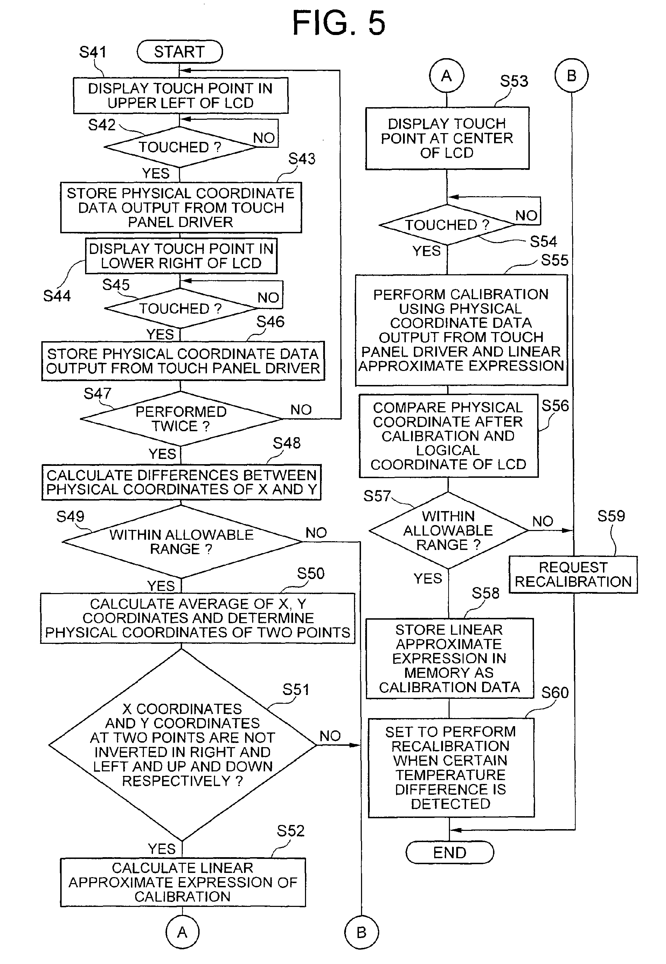

Fig. 5 is a flowchart showing another calibration performed by a display terminal device with a touch panel function according to a third exemplary embodiment of the invention. Although the configuration of the display terminal device with a touch panel function, which performs calibration of this example, is the same as that of the first exemplary embodiment shown in Fig. 1, processing to be performed when calibration data is stored at the time that calibration ends and an aspect of setting execution of recalibration under a certain condition are different.

In Fig. 5, as steps S41 to S47 are the same as steps S1 to S17 of the first exemplary embodiment, and processing of requesting recalibration at step S59, when a difference between measured coordinate data after calibration and logical coordinate data of the LCD is out of the allowable range, is the same as that of step S19 of the first exemplary embodiment, the detail description thereof is not repeated below.

At step S57, the temperature sensor 19 sequentially measures the temperature of the display terminal device, and outputs the measured data to the temperature recognition unit 23. The calibration processing unit 21 of the control section 10 receives temperature data output by the temperature recognition unit 23, and if respective differences are within the allowable range, stores temperature data of the display termination device when a linear approximate expression and calibration are applied, in the memory 12 as calibration data (step S58).

The calibration processing unit 21 of the control section 10 receives temperature data output by the temperature recognition unit 23, sets to start recalibration when it is detected that a difference between the temperature data and temperature information stored in the memory 12 exceeds a certain amount (step S60), and terminates the processing.

As a touch point is displayed in the upper left on the screen of the LCD 16 under the control of the terminal control section 20 when the calibration processing unit 21 of the control section 10 detects a temperature rise in the display terminal device and starts recalibration (step S41), a user can start recalibration. In that case, as there is a possibility that processing other than calibration is performed in the display terminal device, it is desirable to show a text display or the like prompting the user to touch the touch point, near the touch point.

According to the third exemplary embodiment of the invention, when the calibration ends and calibration data is stored in the memory 12, not only the calibration data but also temperature information of the terminal when the calibration has been performed are stored, and a fact that recalibration processing has to be started, using a detection that a difference between the terminal temperature at the time when the calibration is performed and the current terminal temperature reaches a certain amount as a trigger, can be displayed on the screen of the display terminal device, it is possible to reduce a possibility that inappropriate calibration state continues when the temperature environment of the terminal is drastically changed.

While the embodiments of the present invention have been described in detail with use of the drawings, the specific configuration is not limited to this embodiment, and the present invention also includes variations in design and the like within the scope not departing from the spirit of the present invention. For example, a display instrument to be used for a display terminal device with a touch panel function of the present invention is not limited to an LCD, and any other types of display instruments, to which a touch panel can be mounted, may be used.

While the present invention has been described with reference to the embodiment (and examples), the present invention is not limited to the above described embodiments (and examples). Various changes in form and details which can be understood by those skilled in the art may be made therein within the scope of the present invention.

This application is based upon and claims the benefit of priority from Japanese patent application No. 2007-057911, filed on March 7, 2007, the disclosure of which is incorporated herein in its entirety by reference.

INDUSTRIAL APPLICABILITY

The calibration according to the present invention is applicable to any types of display terminal devices having a touch panel on the display screen of the display.

BRIEF DESCRIPTION OF THE DRAWINGS

Fig. 1 is a block diagram showing the configuration of a display terminal device with a touch panel function of the present invention.
Fig. 2 is a flowchart showing a calibration method of a display terminal device with a touch panel function according to the first exemplary embodiment of the invention.
Fig. 3 is a diagram showing an example of a display of the LCD when calibration is performed in the case of the first exemplary embodiment.
Fig. 4 is a flowchart showing calibration by a display terminal device with a touch panel function according to the second exemplary embodiment of the invention.
Fig. 5 is a flowchart showing calibration by a display terminal device with a touch panel function according to the third exemplary embodiment of the invention.

DESCRIPTION OF REFERENCE NUMERALS

10     control section
12     memory
14     touch panel
15     touch panel driver
16     LCD
17     clock
18     counter
19     temperature sensor
20     terminal control section
21     calibration processing unit
22     elapsed time recognition unit
23     temperature recognition unit

**Claims**

1. A display terminal device with a touch panel function, comprising:

   a touch panel provided on a display screen;
   touch panel drive means for generating coordinate data of a point where the touch panel is touched; and
   control means for performing calibration of the display screen based on the coordinate data output by the touch panel driver, wherein
   the control means confirms that a difference between multiple pieces of X coordinate data and a difference between multiple pieces of Y coordinate data, generated by repeated touches to points other than a center of the touch panel, are within an allowable range, to thereby reduce an error between measured coordinate data of the touched point and logical coordinate data.

2. The display terminal device with the touch panel function, according to Claim 1, wherein
   when the difference between the multiple pieces of X coordinate data and the difference between the multiple pieces of Y coordinate data are within the allowable range, the control means calculates average values of the X coordinate data and the Y coordinate data of the points generated by the repeated touches and determines measured coordinate data of the point, and confirms that measured coordinate data at each of the points is not inverted, to thereby reduce an error between the measured coordinate data of the point and the logical coordinate data.

3. The display terminal device with the touch panel function, according to Claim 2, wherein
   when the control means confirms that the measured coordinate data at each of the points is not inverted, if a value obtained by comparing coordinate data at the center and a logical coordinate data, when calibration is performed using measured coordinate data output by a touch to the center of the display screen and a linear approximate expression, is within an allowable range, the linear approximate expression is stored as calibration data in a memory.

4. The display terminal device with the touch panel function, according to Claim 1, wherein
   the control means starts next calibration using a time at which the calibration has been performed as a basis for time information.

5. The display terminal device with the touch panel function, according to Claim 1, wherein
   the control means starts calibration again on a basis of temperature information of the display terminal device of a time when the calibration has been performed.

6. A calibration method for performing calibration of a touch panel provided on a display screen of a display terminal device, comprising:
   confirming that a difference between multiple pieces of X coordinate data and a difference between multiple pieces of Y coordinate data, generated by repeated touches to points other than a center of the touch panel, are within an allowable range, thereby reducing an error between measured coordinate data of the touched point and logical coordinate data.

7. The calibration method according to Claim 6, further comprising:

   when the difference between the multiple pieces of X coordinate data and the difference between the multiple pieces of Y coordinate data are within the allowable range, calculating average values of the X coordinate data and the Y coordinate data of the points generated by the repeated touches and determining measured coordinate data of the point, and confirming that the measured coordinate data at each of the points is not inverted, thereby reducing an error between the measured coordinate data of the point and the logical coordinate data.

**8.** The calibration method according to Claim 7, further comprising:

when the control section confirms that the measured coordinate data at each of the points is not inverted, if a value obtained by comparing coordinate data at the center and a logical coordinate data, when calibration is performed using measured coordinate data output by a touch to the center of the display screen and a linear approximate expression, is within an allowable range, storing the linear approximate expression as calibration data in a memory.

**9.** The calibration method according to Claim 6, further comprising, starting next calibration using a time at which the calibration has been performed as a basis for time information.

**10.** The calibration method according to Claim 6, further comprising, starting calibration again on a basis of temperature information of the display terminal of a time when the calibration has been performed.

# FIG. 1

EP 2 120 134 A1

# FIG. 2

S1 START

DISPLAY TOUCH POINT IN UPPER LEFT OF LCD

S2 TOUCHED ? — NO

YES — S3

STORE PHYSICAL COORDINATE DATA OUTPUT FROM TOUCH PANEL DRIVER

DISPLAY TOUCH POINT IN LOWER RIGHT OF LCD — S4

S5 TOUCHED ? — NO

YES — S6

STORE PHYSICAL COORDINATE DATA OUTPUT FROM TOUCH PANEL DRIVER

S7 PERFORMED TWICE ? — NO

YES — S8

CALCULATE DIFFERENCES BETWEEN PHYSICAL COORDINATES OF X AND Y

S9 WITHIN ALLOWABLE RANGE ? — NO

YES — S10

CALCULATE AVERAGE OF X, Y COORDINATES AND DETERMINE PHYSICAL COORDINATES OF TWO POINTS

X COORDINATES AND Y COORDINATES AT TWO POINTS ARE NOT INVERTED IN RIGHT AND LEFT AND UP AND DOWN RESPECTIVELY ? — S11 — NO

YES — S12

CALCULATE LINEAR APPROXIMATE EXPRESSION OF CALIBRATION

A

B

A

DISPLAY TOUCH POINT AT CENTER OF LCD — S13

TOUCHED ? — NO — S14

YES

PERFORM CALIBRATION USING PHYSICAL COORDINATE DATA OUTPUT FROM TOUCH PANEL DRIVER AND LINEAR APPROXIMATE EXPRESSION — S15

COMPARE PHYSICAL COORDINATE AFTER CALIBRATION AND LOGICAL COORDINATE OF LCD — S16

WITHIN ALLOWABLE RANGE ? — S17 — NO

YES

STORE LINEAR APPROXIMATE EXPRESSION AS CALIBRATION DATA IN MEMORY

S18

REQUEST RECALIBRATION — S19

END

12

# FIG. 3

S1 CALIBRATION POINT OF S1 (CENTER OF +)

16

S13 CALIBRATION POINT OF S13 (CENTER OF +)

S4 CALIBRATION POINT OF S4 (CENTER OF +)

# FIG. 4

S21 — START

DISPLAY TOUCH POINT IN
UPPER LEFT OF LCD

S22 — TOUCHED ? — NO

YES

S23 — STORE PHYSICAL COORDINATE
DATA OUTPUT FROM TOUCH PANEL
DRIVER

DISPLAY TOUCH POINT IN
LOWER RIGHT OF LCD

S24 — S25 — TOUCHED ? — NO

YES

S26 — STORE PHYSICAL COORDINATE
DATA OUTPUT FROM TOUCH
PANEL DRIVER

S27 — PERFORMED TWICE ? — NO

YES

S28 — CALCULATE DIFFERENCES BETWEEN
PHYSICAL COORDINATES OF X AND Y

S29 — WITHIN ALLOWABLE
RANGE ? — NO

YES

S30 — CALCULATE AVERAGE OF X, Y
COORDINATES AND DETERMINE
PHYSICAL COORDINATES OF
TWO POINTS

X COORDINATES
AND Y COORDINATES
AT TWO POINTS ARE NOT
INVERTED IN RIGHT AND
LEFT AND UP AND DOWN
RESPECTIVELY ? — S31 — NO

YES

S32 — CALCULATE LINEAR APPROXIMATE
EXPRESSION OF CALIBRATION

A

A

DISPLAY TOUCH
POINT AT CENTER
OF LCD — S33

TOUCHED ? — NO
S34

YES

PERFORM CALIBRATION
USING PHYSICAL
COORDINATE DATA
OUTPUT FROM TOUCH
PANEL DRIVER AND
LINEAR APPROXIMATE
EXPRESSION — S35

COMPARE PHYSICAL
COORDINATE AFTER
CALIBRATION AND
LOGICAL COORDINATE
OF LCD — S36

WITHIN
ALLOWABLE
RANGE ? — S37 — NO — S39

YES

STORE LINEAR
APPROXIMATE
EXPRESSION AS
CALIBRATION DATA
IN MEMORY — S38

REQUEST
RECALIBRATION

SET NEXT CALIBRATION
TIME AFTER CERTAIN
PERIOD — S40

END

B

B

# FIG. 5

START (S41)

S41 — DISPLAY TOUCH POINT IN UPPER LEFT OF LCD

S42 — TOUCHED ?
- NO → (back to display)
- YES ↓

S43 — STORE PHYSICAL COORDINATE DATA OUTPUT FROM TOUCH PANEL DRIVER

S44 — DISPLAY TOUCH POINT IN LOWER RIGHT OF LCD

S45 — TOUCHED ?
- NO → (back)
- YES ↓

S46 — STORE PHYSICAL COORDINATE DATA OUTPUT FROM TOUCH PANEL DRIVER

S47 — PERFORMED TWICE ?
- NO → (back)
- YES ↓

S48 — CALCULATE DIFFERENCES BETWEEN PHYSICAL COORDINATES OF X AND Y

S49 — WITHIN ALLOWABLE RANGE ?
- NO →
- YES ↓

S50 — CALCULATE AVERAGE OF X, Y COORDINATES AND DETERMINE PHYSICAL COORDINATES OF TWO POINTS

S51 — X COORDINATES AND Y COORDINATES AT TWO POINTS ARE NOT INVERTED IN RIGHT AND LEFT AND UP AND DOWN RESPECTIVELY ?
- NO →
- YES ↓

S52 — CALCULATE LINEAR APPROXIMATE EXPRESSION OF CALIBRATION

(A)

A — S53 — DISPLAY TOUCH POINT AT CENTER OF LCD

TOUCHED ?
- NO → (back)
- YES ↓ S54

S55 — PERFORM CALIBRATION USING PHYSICAL COORDINATE DATA OUTPUT FROM TOUCH PANEL DRIVER AND LINEAR APPROXIMATE EXPRESSION

S56 — COMPARE PHYSICAL COORDINATE AFTER CALIBRATION AND LOGICAL COORDINATE OF LCD

S57 — WITHIN ALLOWABLE RANGE ?
- NO → S59
- YES ↓

S59 — REQUEST RECALIBRATION

S58 — STORE LINEAR APPROXIMATE EXPRESSION IN MEMORY AS CALIBRATION DATA

S60 — SET TO PERFORM RECALIBRATION WHEN CERTAIN TEMPERATURE DIFFERENCE IS DETECTED

END

(B)

## INTERNATIONAL SEARCH REPORT

| | International application No. |
|---|---|
| | PCT/JP2008/053545 |

| A. CLASSIFICATION OF SUBJECT MATTER |
|---|
| *G06F3/041*(2006.01)i |
| According to International Patent Classification (IPC) or to both national classification and IPC |

| B. FIELDS SEARCHED |
|---|
| Minimum documentation searched (classification system followed by classification symbols) |
| G06F3/041 |
| Documentation searched other than minimum documentation to the extent that such documents are included in the fields searched |
| Jitsuyo Shinan Koho    1922-1996  Jitsuyo Shinan Toroku Koho  1996-2008 |
| Kokai Jitsuyo Shinan Koho   1971-2008  Toroku Jitsuyo Shinan Koho  1994-2008 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2004-185512 A (Sharp Corp.),<br>02 July, 2004 (02.07.04),<br>Full text; all drawings<br>(Family: none) | 1,6<br>4,5,9,10<br>2,3,7,8 |
| Y<br>A | JP 2004-090457 A (Canon Inc.),<br>25 March, 2004 (25.03.04),<br>Par. Nos. [0062] to [0064]; Fig. 9<br>(Family: none) | 4,9<br>2,3,7,8 |
| Y<br>A | JP 2001-034947 A (Sony Corp.),<br>09 February, 2001 (09.02.01),<br>Par. Nos. [0041] to [0043]; Fig. 8<br>(Family: none) | 5,10<br>2,3,7,8 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 April, 2008 (07.04.08) | 15 April, 2008 (15.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001265512 A
- JP 2003263275 A
- JP 2004054413 A
- JP 2005056088 A
- JP 2006243939 A
- JP 9160719 A
- JP 10116155 A
- JP 2007057911 A